# EUROPEAN PATENT APPLICATION

(11) **EP 3 654 219 A1**
(43) Date of publication of application: **20.05.2020**
(21) Application number: 18206291.9
(22) Date of filing: 14.11.2018
(51) Int. Cl.: G06F 21/57, H04L 29/06

(54) **DETERMINING VERSION INFORMATION OF A NETWORK SERVICE**

(71) Applicant: Baden-Württemberg Stiftung gGmbH, 70174 Stuttgart (DE)
(72) Inventor: ARMKNECHT, Frederik, 67549 Worms (DE); GORKE, Christian, 55118 Mainz (DE)
(74) Representative: Müller-Boré & Partner Patentanwälte PartG mbB

(57) **Abstract**

Aspects of the application relate to a computer-implemented method, a computer program and a network security tool. The computer-implemented method is for determining version information of a network service. The method comprises providing a plurality of specified queries, and receiving an identifier of the network service. The method further comprises retrieving, using the identifier, a first one of the specified queries. The method further comprises querying the network service via the first specified query, wherein the first specified query includes a first task. The method further comprises receiving a response to the first specified query, and determining, based on the response, a first result indication that indicates whether the first task has been successfully carried out. The method further comprises determining first version information of the network service based on the first result indication, and providing the version information of the network service. The version information includes the first version information.

## Description

The application relates to accessing and using a network service. More specifically, the application relates to determining version information of a network service. The version information may be used to determine the security of the network service (e.g., a vulnerability of the network service) and/or a stage of development of the network service.

Users (e.g., corporate or consumer) increasingly use network services. These services may be provided or hosted by a service provider. The services may be publicly accessible via the internet. The services may include web applications such as content management systems (e.g., WordPress), software components for computer languages (e.g., a parser for PHP), databases (e.g., MySQL) and system services (e.g., simple mail transfer protocol - SMTP). The services may be accessible at any time, from any place, which makes them particularly vulnerable to attacks. Further, new vulnerabilities for these services are often uncovered. For example, as of January 19, 2018, the common vulnerabilities and exposures (CVE) database (https://cvs.mitre.org) included almost 6000 known vulnerabilities for PHP.

In some cases, network services are not up-to-date and may have known vulnerabilities. The vulnerabilities may be present because the service provider(s) hosting the services have a financial incentive to keep maintenance and the number of system modifications to a minimum, i.e., to avoid changes, updates or revisions due to dependencies and configurations. However, if a service provider is does not properly maintain network services (i.e., keep the services up-to-date and/or ensure the services are patched), the services themselves, and possibly other parts of the system, may be vulnerable to attacks.

Service providers may take steps to prevent versions of hosted network services to be determined. For example, a service provider may practice security through obscurity, possibly by blocking or suppressing software names (where software refers to the services themselves or supporting applications), error messages or version information. Even if version information of the network service is available, it may be imprecise. For example, it is possible that the version information is limited to a major version number, or a major version number and a minor version number. In particular, patch version numbers or even minor version numbers may be omitted.

As another example, the service provider may use load balancing to obscure the version of the network service. In this case, queries of the network service may be directed to servers running different versions of the network service and responses to the queries may be inconsistent. However, users of network services provided by the service provider may have an interest in obtaining accurate version information for the network services. In particular, a user may be able to use the version information to determine whether the network service vulnerabilities to attack (e.g., the service has known vulnerabilities).

Conventionally, users may be obliged to trust the service provider to implement updates network services quickly and correctly. In some cases, version information can be determined using a network security tool, particularly, a vulnerability scanner or a security assessment tool. Such tools may be used in the context of a security audit. Vulnerability scanners (for example Nessus) may be useful for uncovering known vulnerabilities present in a computer system. Security assessment tools (e.g., for penetration testing) may be useful for determining when a system is vulnerable to exploits, for example, because of incomplete input parsing. Known security assessment tools include Metasploit and the Burp Suite.

However, conventional network security tools use an interface provided for determining version information (e.g., the "phpversion()" function for the PHP parser or the "mysql -v" command for MySQL) in order to obtain version information from network services. Such version information might not be accurate, particularly, the network service may be configured so that the service does not display version information or the version information may have been deliberately changed (e.g., by the service provider in the interest of confounding an attacker).

Accordingly, it may be a problem to determine version information of a network service independently of (i.e., without support from) the service provider. Further, it may be a problem to determine the version information of the network service without using the interface provided for determining the version information (i.e., a dedicated version interface) or a file structure (e.g., names, timestamps, file locations) on a server hosting the network service.

Conventionally, extracting version information from SQL databases may be performed using a version interface (e.g., formulating an SQL query including "SELECT VERSION()" and sending the query to the database). It may be a problem to obtain version information of the database service without using the version interface (e.g., without an SQL query).

Conventionally, a server (e.g., of a service provider) may carry out device fingerprinting (also referred to as machine or browser fingerprinting) in order to collect information about a remote client computer. Device fingerprints may be obtained passively (i.e., without obvious querying of the client computer) or actively (i.e., including some degree of invasive querying). Such fingerprints may be used to identify and track users that access network services, by matching characteristic features of the client computer (e.g., browser or network protocol headers) against known device fingerprints.

The reversal of conventional device fingerprinting may be referred to as reverse fingerprinting. Reverse fingerprinting may be used to determine version information of the network service (e.g., an alphanumeric value providing sequence-based identification) without depending on external support or dedicated interfaces.

Using techniques described in the present application, it is possible to accurately determine version information of a network service (e.g., a specific version number assigned to the network service) without using the dedicated version interface (e.g., the phpversion() function), without asking the service provider and without using an interface made available by the service provider.

According to an aspect, a computer-implemented method for determining version information of a network service is provided. The method comprises providing a plurality of specified (predetermined or predeterminable) queries. The method further comprises receiving an identifier of the network service. The method further comprises retrieving, using the identifier, a first one of the specified queries. The method further comprises querying the network service via the first specified query. The first specified query includes a first task. The method further comprises receiving a response to the first specified query. The method further comprises determining, based on the response, a first result indication that indicates whether the first task has been successfully carried out. The method further comprises determining first version information of the network service based on the first result indication. The method further comprises providing the version information of the network service, wherein the version information includes the first version information.

The network service may be a software application that provides one or more of the following: data storage, manipulation, presentation, communication. The service may be implemented using a client-server or peer-to-peer architecture based on network protocols.

The network service may be provided by a server (or server component) running on one or more computers (possibly a dedicated server computer offering multiple services) and accessed via a network by a client (or client component) running on another computer. However, the client and server components can both be run on the same computer.

The identifier of the network service may be a name (e.g., PHP or WordPress) or a number (e.g., service number 24, which corresponds to PHP). The identifier may function to uniquely identify the service (i.e., distinguish the service from all other services for which version information can be determined).

The identifier of the network service may be associated (e.g., in a database) with specified queries for the network service and further information about the service. For example, the identifier may be associated with one or more communication protocols (e.g., hypertext transfer protocol - HTTP or file transfer protocol - FTP) for communicating with the service.

A subset of the released versions of the network service may correspond to modifications to the functionality of the network service and/or security-relevant updates to the network service. Accordingly, a vulnerability published before the released version can no longer be exploited or functionality added or modified in the released version can be tested. The tasks included in the specified queries may be directed to exploiting vulnerabilities corresponding to released versions of the network service or to testing functionality added or modified in released versions of the network service. Successfully carrying out a task (e.g., the first task) may mean that a vulnerability could not be exploited, or that added or modified functionality of the network service produced an expected result.

In some cases, the tasks can only be successfully carried out by a subset (e.g., a proper subset) of released versions of the service. For example, versions of the service having a major version number of 7 and a version number of at least 7.2.0 might be capable of carrying out one task. In addition, versions of the service having a major version number of 5 and a version number greater than 5.3.2 might also be capable of carrying out the task. Versions of the service having a major version number of 7 and a version number less than 7.2.0 might not be capable of successfully carrying out the task.

The first version information may provide limited insight into the version of the network service. For example, the first version information may indicate that the version of the network service is above a major version number (e.g., greater than 7.0) or that the network service is not assigned the most recent released version number (e.g., 7.3.2). The version information may include further information in addition to the first version information, e.g., a minor version number and/or a patch number in addition to the information about the major version number.

The specified queries may be stored in a database and retrieved from the database. The database may include specified queries for a plurality of different network services. Each of the different network services having queries in the database may have a plurality of specified queries specific to that service. For example, there may be at least about fifty queries in the database for a PHP network service and at least about fifty queries (different from the PHP queries) for a MySQL network service.

In the context of the present application, released version refers to a version of the network service that is or was made available for use. A released version might not be available any longer. The released version may be supported by the developer of the service and/or vulnerable to exploits, i.e., there may be well known vulnerabilities in the released version of the service. The released version of the service could be the most recent or an older version.

In some cases, the network service is one of the following:
- a content management system (CMS), such as Word Press;
- an internet forum or message board, such as phpBB, FUDforum or bbPress;
- a software component for a computer language, such as a PHP interpreter or a Java compiler;
- a database, such as MySQL;
- a Hypertext Transfer Protocol (HTTP) server, such as Apache or Microsoft Internet Information Services (IIS);
- an email service, e.g., a simple mail transfer protocol (SMTP) or post office protocol (POP) service;
- a virtual machine;
- an application container, such as Docker.

The computer language may be used to communicate with a computer. The computer language may be a programming language. The software component for the computer language provide an interface for writing programs, instructions or scripts in the computer language.

The virtual machine may be an operating system level virtual machine, e.g., a process virtual machine rather than a system virtual machine.

The version information may relate to the security of the network service and/or a stage of development of the network service. In particular, by indicating a lower boundary of the version of the network service, the version information may indicate that the network service does not have vulnerabilities that are present in other (e.g., earlier) versions of the network service. By indicating that the network service is not assigned at least one released version, the version information may indicate that the network service has vulnerabilities that are present in other versions.

The stage of development of the network service may be useful for determining capabilities or a level of reliability of the network service. Accordingly, by indicating the stage of development, the version information may provide machine state information, i.e., it may reveal the presence or absence of machine functionality

The version information may be provided as a relationship to a released version of the service. For example, when "7.2.5" is a released version, the version information may be, "greater than 7.2.5".

The version information may include one of the following:
- a version of the network service (e.g., 1.2),
- an indication that the network service is not assigned at least one released version (e.g., the network service is not assigned version 5.3.3),
- a lower boundary of the version of the network service without specifying an upper boundary (e.g., the network service is assigned version 4.2.3 or a higher version number),
- an upper boundary of the version of the network service without specifying a lower boundary (e.g., the network service is assigned a version number lower than 5.2.1),
- a lower boundary and an upper boundary of the version of the network service (e.g., the network service is assigned a version number between 7.0.0 and 7.1.0).

Functionality to successfully carry out the first task may be implemented in at least one released version of the network service. In particular, at least one released version of the network service might not include the functionality to successfully carry out the first task. For example, an attempt to carry out the first task may trigger an error message from at least one released version of the service, or carrying out the first task may lead to an unexpected or incorrect result (either of which would be considered to mean that the first task has not been successfully carried out).

In some cases, the version information includes a numeric value. Accordingly, determining the first version information may comprise comparing the numeric value with a released version of the network service.

The version information may also be alphanumeric (e.g., 3.2a) or include a date (e.g., a release date such as 11.10 for October 2011 or 20040505 for May 5, 2004). The version information may take various forms, so long as it comparable to released versions of the network service and a determination can be made regarding the version assigned to the network service and at least one released version of the network service (e.g., that the version of the network service is greater than at least one released version).

Versions of the network service may be specified using sequence-based identifiers, possibly including a hierarchical sequence of version numbers. More specifically, the version numbers may include a major version number, a minor version number, and optionally, a patch number. In one example, breaking (i.e., significant) changes are indicated by increasing the major version number (high risk), new non-breaking (i.e., less significant) changes are indicated by increasing the minor version number (medium risk) and all other non-breaking (even less significant) changes are indicated by increasing the patch version number (lowest risk).

The specified queries may include at least one query for determining information about the major version number of the network service. The specified queries may further include at least one query for determining information about the minor version number of the network service. The specified queries may include at least one query for determining information about the patch number of the network service.

For example, each network service for which version information can be determined may have a plurality of major version queries and a plurality of minor version queries. The network service may also have a plurality of patch version queries.

The plurality of specified queries may include a plurality of major version queries, the major version queries for determining version information for different major versions of the network service, each of the major version queries including a task for determining major version information. The plurality of specified queries may further include a plurality of minor version queries, the minor version queries for determining minor version information for different minor versions of the network service, each of the minor version queries including a task for determining minor version information.

The plurality of specified queries may further comprise a plurality of patch version queries, the patch version queries for determining patch version information for different patch versions of the network service, each of the patch version queries including a task for determining patch version information.

In some cases, the version of the network service (including major, minor and possibly patch version numbers) can be accurately determined using between one and four of the specified queries.

The first specified query may be one of the major version queries. When the first result indication indicates that the first task has been successfully carried out and the first version information includes the major version number of the network service, the method may further comprise retrieving, based on the identifier and the major version number of the network service, a minor version query from the plurality of minor version queries. The method may further comprise querying the network service via the first minor version query. The method may further comprise receiving a response to the first minor version query. The method may further comprise determining, based on the response to the first minor version query, a minor version result indication that indicates whether the task for determining minor version information has been successfully carried out. The method may further comprise determining minor version information of the network service based on the minor version result indication. The provided version information may further include the minor version information.

Patch version information may be determined according to an approach that is similar to the approach for determining minor version information. An example of a task for determining patch version information is as follows:

```
       $array = [$random]; var_dump(list($val) = $array);
```

The task above may be carried out as part of a query of a PHP network service, after it has been determined that the PHP network service has major version number "7". The task above may be used to determine a lower boundary of the version of the network service. More particularly, the task above may be used to determine whether the network service has been assigned version 7.0.15 or a higher version.

The task above includes a random value in the variable "$random". Use of the random value has the effect improving the accuracy of the version information by making the query more difficult to anticipate, i.e., making it more difficult to provide a predetermined response and thereby adversely affect the accuracy of the version information.

Determining the first result indication may include determining whether the response to the query of the PHP service (i.e., the result of the "var_dump" function above) matches the following test:

```
      array(1) {[0]=>int($random)}
```

In particular, if the task could not be successfully carried out, an "invalid opcode" error may occur. If the task could be successfully carried out, then the response may match the output of the test. When the task is successfully, carried out, the version information may indicate that the version of the network service is at least 7.0.15. When the task cannot be successfully carried out, the version information may indicate that the version of the network service is at least 7.0.0 and less than 7.0.15.

In some cases, the first specified query may be used to determine version information about the major version of the network service. For example, based on the first result indication (i.e., a successful indication), the first version information may specify that the version of the network service is at least 7.0.0. One or more minor version queries may be used to determine information about the minor version of the network service. For example, based on the minor version result indication, the minor version information may indicate that the minor version of the network service is at least 2. Hence, the provided version information may indicate that the version of the network service is at least 7.2.0.

Another example of a task for a query for determining patch version information is as follows.

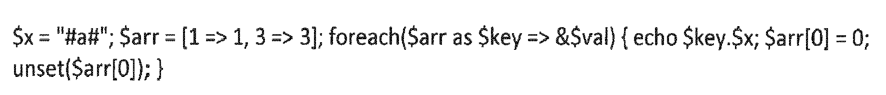

In the task above, "#a#" symbols are used to represent random strings, each having 20 characters. The task above may be used in the context of a PHP network service, after it has been determined that the network service has major version "7" and minor version "2".

If the task is successfully carried out, the response will be

```
      1#a#3#a#
```

Accordingly, if the response consists of "1#a#3#a#", the result indication will indicate that the query was been successfully carried out and the version information will indicate that the version of the network service is at least 7.2.11 . Earlier versions of the network service will produce other responses (e.g., unexpected results) indicating that the task was not successfully carried out.

The version information may be partial, e.g., limited to a major version number. When more specific version information is desired, e.g., when the version information includes at least major and minor version numbers, the version information may be determined according to a strategy. The strategy may take various forms, with the goal being to determine the version information in the most efficient possible way.

For example, one strategy would be as follows. The first specified query may be for determining major version information for the highest major version in the plurality of major version queries (i.e., the highest major version for which a query is available). The first minor version query may be for determining minor version information for the lowest minor version in the plurality of minor version queries (i.e., the lowest minor version of the determined major version for which a query is available). This approach may be more efficient than starting from the lowest major version and/or the highest minor version (or the highest patch version). In particular, higher major versions are more likely to be available in comparison to lower major versions, while minor versions and/or patches may be less likely to be installed.

For example, major versions 2-7 of PHP may be present in the major version queries. The first major version query may be for determining whether the network service is assigned at least major version 7 (the highest major version present). Similarly, minor versions 0-4 may be present in the plurality of minor version queries for the network service. Accordingly, the first minor version query may be for determining whether minor version 0 is assigned to the network service (PHP in this case).

Other strategies may also be used. For example, a strategy corresponding to the binary (or half-interval) search algorithm may also be used. Accordingly, rather than starting with the highest major version number, a middle major version number (e.g., "4" in versions 2-7) could be used as a starting point. Similarly, rather than starting with the lowest minor version number or the lowest patch number, a middle version number could instead be the starting point. The remaining version numbers could be repeatedly halved (as specified in the conventional binary search algorithm) until a specific version number is found or until there are no remaining specified queries. Binary search could also be an efficient strategy.

When the first result indication indicates that the first task has not been successfully carried out, the method may further comprise determining version information about the major version of the network service by retrieving major version queries, in descending order of major version number, from the specified queries until a major version result indication determined from a response to one of the retrieved major version queries indicates that a task included with the major version query has been successfully carried out by the network service, or the major version result indication indicates that no task included with one of the retrieved major version queries has been successfully carried out and no further major version queries are available.

The method may further comprise determining major version information based on the major version result indication. The first version information may include the major version information.
In some cases, when a first minor version result indication indicates that the task for determining minor version information has been successfully carried out, the method further comprises determining version information about the minor version of the network service by retrieving, based on the identifier and the major version number of the network service, minor version queries, the minor version queries being retrieved from the specified queries in ascending order of minor version number until a minor version result indication determined from a response to one of the retrieved minor version queries indicates that a task included with the minor version query has been successfully carried out by the network service, or the minor version result indication indicates that no task included with one of the retrieved minor version queries has been successfully carried out and no further minor version queries are available. The method further comprises determining minor version information based on the minor version result indication. The provided version information may further include the minor version information.

Each of the tasks mentioned above may include at least one subroutine (i.e., function or procedure) call. Further, each of the tasks may request the network service to assign a value to a variable and return the variable in the response. The value may be a random value, as discussed below.

In the following example, the network service is implemented as a PHP service (e.g., the PHP interpreter or parser). However, the approach described is applicable for other network services as well. Accordingly, determining the version information for the PHP service may proceed as follows.

First, the highest major version for which a specified query is available is selected. This is version 7. Next, the lowest minor version for which a specified query is available is selected. This is 0, so that the version including major and minor version numbers is 7.0. Next, the lowest patch version for which a query is available is selected. This is also 0, so that the version number including major, minor and patch version numbers is 7.0.0.

A first specified query may be retrieved and used to query for version 7.0.0. If the task included with the first specified query fails, the method may include retrieving a next major version query for the next highest major version number, and querying the PHP service again with the next major version query.

If the task is carried out successfully (i.e., the major version number of the PHP service has been determined - as the first version information), a first minor version query for a version of the service including an incremented minor version number (7.1) and a lowest patch version (7.1.0) may be retrieved.

The example includes querying the PHP service with the first minor version query. If the task included with the query fails, retrieving a patch version query if a patch version query is available. If the task included with the query is successfully carried out, continue retrieving higher minor version queries until one of the tasks included with a query fails or there is no higher minor version query available (7.2.0).

After a minor version number has been determined, a patch version number may be similarly determined. In particular, a query for the next highest patch version number may be retrieved (7.2.1). Further, queries for higher patch versions may be retrieved until one of the tasks included with a query fails or there is no higher patch version available. At the end, version number 7.2.11 may be provided as the version information of the PHP service.

In some cases, a set of version numbers, a boundary, or at least one excluded version number may be provided as version information of the network service. If possible, a single version number is provided as the version information of the network service.

Adding more precise values to the version information may make the version information more useful. For example, knowing not only the minor version but also the patch version may enable a user to determine exactly how many known vulnerabilities the network service has, if any.

At least one of the specified queries may include at least one placeholder for a random value. More specifically the task included with the specified query may include the placeholders for random values. In such cases, the method further may comprise determining at least one random value (e.g., via a pseudorandom number generator).

The method may further comprise, after retrieving a respective one of the specified queries, placing the random value in the placeholder of the respective specified query (e.g., the first specified query, another major version query, a minor version query or a patch version query). More specifically, the placeholder may be included in the task of the specified query and the random value may be placed in the placeholder of the task included in the specified query.

The placeholder may support various data types, such as a string or an integer. The placeholder may support various sizes, e.g., an integer having a value between 1 and 10 or a string including 1-20 characters.

Use of the random value may help prevent queries from being anticipated or responses from being predetermined (i.e., stored in advance of the query). Accordingly, use of the random value may improve the accuracy of the version information.

Load balancing or other schemes of the service provider may be used to direct queries to different instances of the network service. One or more of the instances may have different versions than the other instances. Such schemes may be detected by querying the network service multiple times (e.g., with the first specified query) and comparing results. A different random value may be inserted in the placeholder for each of the queries in order to prevent the queries from being anticipated, as discussed above. Inconsistent version information determined from responses to the queries may make it possible to detect insecure instances of the network service, possibly resulting from sloppy maintenance practices.

The response to the first specified query may include a timestamp. Accordingly, when the response is received before the end of a specified period and the response indicates that the first task has been successfully carried out, the version information may comprise an indication that a version of the network service is at least a first released version. For example, the indication may specify that the version of the network service is at least 7.1, where 7.1 is a released version of the network service.

When the response is not received before the end of the specified period or the response indicates that the task has not been successfully carried out, the version information may comprise an indication that the version of the network service is less than the first released version or that the version of the network service is not the first released version. For example the indication may specify that the version of the network service is less than 7.1 or that the version of the network service is not 7.1.

The specified period may be set by default to a maximum of about 500ms. Different specified periods may be chosen for each task, depending on the processing time required to carry out the task. Network latency may also be considered.

The first task may include at least one command or at least one function call. Similarly, the task included with the minor version query may include at least one command, or at least one function call. For example, in the context of the PHP service, the following task may be used to determine if the PHP service has at least the minor version number "1", after it is been determined that the major version of the PHP service is "7":

```
      var_dump("#a#[-#ax#]#b#[-#bx#]#c#[-#cx#]");
```

The task included of the minor version query includes the "var_dump()" function of PHP. Further, the task carries out string splitting with implicit negative offsets. In the task above, "#" symbols are used to represent random values. Specifically, the following random values are used in the task provided above:

```
      #a#: random string(10)
      #ax#: random integer(1-10)
      #b#: random string(10)
      #bx#: random integer(1-10)
      #c#: random string(10)
      #cx#: random integer(1-10)
```

In particular, "#a#", "#b#" and "#c#" are random strings, each having ten characters. "#ax#", "#bx#" and #cx#" are each random integers having a value between 1 and 10.

Although the example above relates to the PHP service, the concepts described can be applied to other network services.

The network service may be accessible via the internet, possibly using an application layer protocol of the internet protocol suite. For example, the network service may be accessible using the SMTP, HTTP, telnet or secure shell (SSH) protocols.

Querying the network service may comprise accessing a user interface of the network service (e.g., via SMTP or HTTP) or accessing a user interface of a shell that provides access to the network service (e.g., via telnet or SSH).

Accessing the user interface may include authenticating with the network service. For example, a user may provide a username and password to authenticate with the network service (e.g., a WordPress service) before the network service is queried. The authentication may result in user access to the network service, as opposed to guest or administrator access.

Network services may produce different results depending on the level of authentication (e.g., queries sent by a user with user access may receive a different response than queries sent by a user with administrator access).

According to another aspect, a computer program comprising computer-readable instructions is provided. The instructions, when loaded and executed on a computer system, cause the computer system to perform operations according to the method described above. The computer program may be implemented in a product, e.g., by being tangibly embodied in a computer-readable medium.

According to yet another aspect, a network security tool (also referred to as a computer security tool or a computer network security tool) for use on a computer system is provided. The network security tool may comprise a plurality of different modules (i.e., plugins or software components). One of the modules includes program code, which, when executed on the computer system, causes the computer system to perform operations according to the method described above.

The network security tool may be a security assessment tool (e.g., Metasploit or the Burp Suite), a vulnerability scanner (e.g., Nessus) or a web application scanner (e.g., Web application attack and audit framework - W3af).

The subject matter described in this application can be implemented as a method or on a device, possibly in the form of one or more computer programs (e.g., computer program products). Such computer programs may cause a data processing apparatus to perform one or more operations described in the application.

The subject matter described in the application can be implemented in a data signal or on a machine readable medium, where the medium is embodied in one or more information carriers, such as a CD-ROM, a DVD-ROM, a semiconductor memory, or a hard disk.

In addition, the subject matter described in the application can be implemented as a system including a processor, and a memory coupled to the processor. The memory may encode one or more programs to cause the processor to perform one or more of the methods described in the application. Further subject matter described in the application can be implemented using various machines.

Details of one or more implementations are set forth in the exemplary drawings and description below. Other features will be apparent from the description, the drawings, and from the claims.

### Brief Description of the Figures

Figure 1 shows a method for determining version information of a network service.
Figure 2 shows a computer that can be used to implement the method.

### Detailed Description

In the following text, a detailed description of examples will be given with reference to the drawings. Various modifications to the examples may be made. In particular, one or more elements of one example may be combined and used in other examples to form new examples.

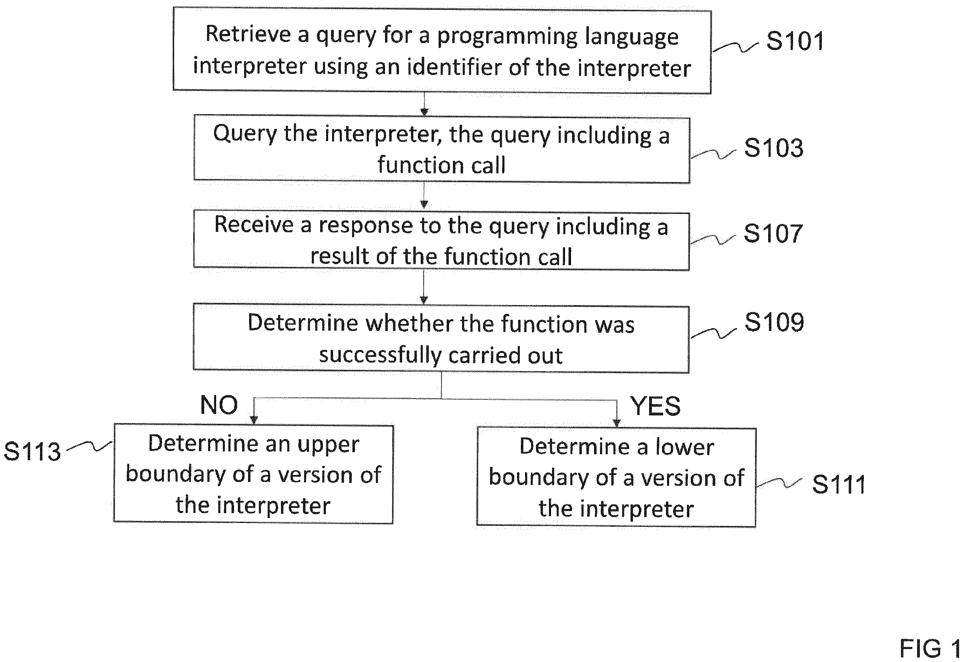

**Figure 1** shows a method for determining version information of a network service.

A plurality of specified queries are provided. For example, queries for a plurality of different network services may be stored in a database. At least one of the specified queries may be specific to each of the network services. For example, the plurality of specified queries may include specified queries for a PHP service, specified queries for a WordPress service and specified queries for a bbPress service.

Specified queries may be provided for services at various levels of a service stack. The service levels may be understood as follows:
- L1: web application (content management service, internet forum),
- L2: backend or support programs for web applications (e.g., a software component for a computer language or a database),
- L3: application protocol services (e.g., SMTP or HTTP)
- L4: operating system level services (e.g., process virtual machine or virtualization program, such as Docker),
- L5: system level or hosting services (e.g., operating system, system virtual machine such as hypervisor),
- L6: hardware or physical infrastructure.

The specified queries may be limited to services operating on L1-L4.

Further, the specified queries may use different underlying techniques. For example, the following three techniques may be used:
- dynamic request/response comparison: determine version information of a web application (e.g., CMS or internet forum) via at least one dynamic query and analysis of the response (L1);
- dynamic function output comparison: determine version information of a backend or support program via at least one function included in a dynamic query and analysis of the result from the function (L2, L3, L4)
- version specific features: determine version information of a backend or support program via features that are not implemented in all released versions (L2, L3, L4).

The method may be understood as an implementation of a query-response protocol (i.e., a request-response message exchange pattern). One or more specified queries are sent to the network service. The responses to the queries are analyzed in order to determine the version information, e.g., a specific version of the network service. Each of the queries includes a task. The tasks can only be successfully carried out by a subset of released versions of the service. For example, different major versions of the service (e.g., version 5 and version 7) might be capable of successfully carrying out the task. However, minor versions within one of the major versions (e.g., versions below 7.0.13) might not be capable of successfully carrying out the task.

In some cases, a task can only be carried out by a single version of the network service (e.g., version 7.2.5).

The method may be carried out in two basic steps: (1) identification of a characteristic query of the network service; (2) execution of the query and evaluation of the response in order to determine version information. These steps may be repeated a number of times in order to further specify (i.e., increase the precision) of the version information.

An identifier of the network service may be received. For example, the PHP service (e.g., a remotely accessible PHP interpreter or a PHP interpreter accessible via a command line tool such as SSH) may be identified (e.g., by name). Although the steps below refer to the PHP services, they are also applicable to other network services.

At step S101, the identifier may be used to retrieve a first specified query for the PHP service. The first specified query may be retrieved from the database containing the specified queries. The identifier may also be used to retrieve a communication protocol for accessing the PHP service, e.g., HTTP.

In some cases, the first specified query may be a major version query, i.e., a query used to determine a major version number of the PHP service.

The first specified query may include one or more placeholders for random values. More specifically the task included with the specified query may include the placeholders for random values. The placeholders may have corresponding data types (e.g., string or integer) and sizes (e.g., a specified number of characters for a string or a specified range for an integer). After the query is retrieved, random values corresponding to the data types and the sizes may be generated for the placeholders (e.g., using a pseudorandom number generator) and the placeholders may be filled with the generated random values.

Step S103 may include querying the PHP service using the first specified query. The first specified query includes a first task for the PHP service. Querying the PHP service may include authenticating as a user of the PHP service. This may include logging into a command shell (e.g., SSH or telnet) and accessing the PHP service via the command shell or authenticating with a plugin for the PHP service (e.g., an SSH remote run plugin for the PHP interpreter).

The query may include a subroutine (e.g., procedure, function or method) call. For example, it may be that the first task can be successfully carried out by a first subset of the released versions of the network service and that will cause an error or unexpected result in a second subset of the released versions of the network service. It is possible that the first subset and the second subset do not intersect.

The first task may include the function call, an expression (e.g., an array assignment or a conditional expression) and/or another syntactic unit (e.g., a statement or command) that produces an unexpected result or error in at least one released version of the network service.

Step S107 may include receiving a response to the first specified query. The response may include a returned value of the function call or another form of result from carrying out the first task.

Step S109 may include determining whether the first task (e.g., the function call) was successfully carried out.

More specifically, the response may be used to determine a first result indication that indicates whether the first task has been successfully carried out. For example, the first result indication may indicate that the task caused the error or reached the unexpected result. An example of an error would be an invalid opcode when assigning a variable within a particular function. An example of an unexpected result is when two values are assigned to variables (e.g., as part of a loop), but only one of the assignments is successful.

First version information of the PHP service may be determined based on the first result indication.

For example, at step S111, the first result indication may lead to the determination of first version information indicating that the version of the PHP service is at least 7.0.0, i.e., that version 7.0.0 is the lower boundary of the version of the PHP interpreter. If "7" is the highest major version for which there is a specified query available, then "7" may be determined to be the major version number of the PHP service.

Alternatively, at step S113, the first result indication may lead to the determination of first version information that indicates that the version of the PHP service is less than 7.0.0, i.e., that 7.0.0 is an upper boundary of a version of the PHP interpreter. In this case, further queries may be used to determine further specify the major version number of the PHP service. For example, it may be established that the major version number of the PHP service is "5".

After determining version information about the major version number of the PHP service, version information about a minor version number of the PHP service may be determined via one or more subsequent specified queries. Further, once version information about the minor version has been determined, further version information about the patch version number may be determined using one or more additional specified queries for the PHP service.

The disclosed approach has a number of advantages. In particular, no additional support from a service provider is required. Further, use of a dedicated version interface (e.g., phpversion() or mysql -v) can be avoided. This service provider and interface independence facilitates broad applicability to a variety of services at various levels of the service stack (e.g., L1-L4, as discussed above).

In addition, once the specified queries have been developed, these queries can be efficiently retrieved and employed at any time; further, an arbitrary number of network services can be queried.

The approach discussed above could be useful for a variety of technical applications. For example, accurate version information could be beneficial for a computer security audit (e.g., including vulnerability and/or penetration testing). Auditors could share their approaches using the database of specified queries. As another example, end users could also use the disclosed approach. In addition, computer system security could be improved, since service providers could no longer hide poor software maintenance practices and might come under increased pressure to keep network services up to date.

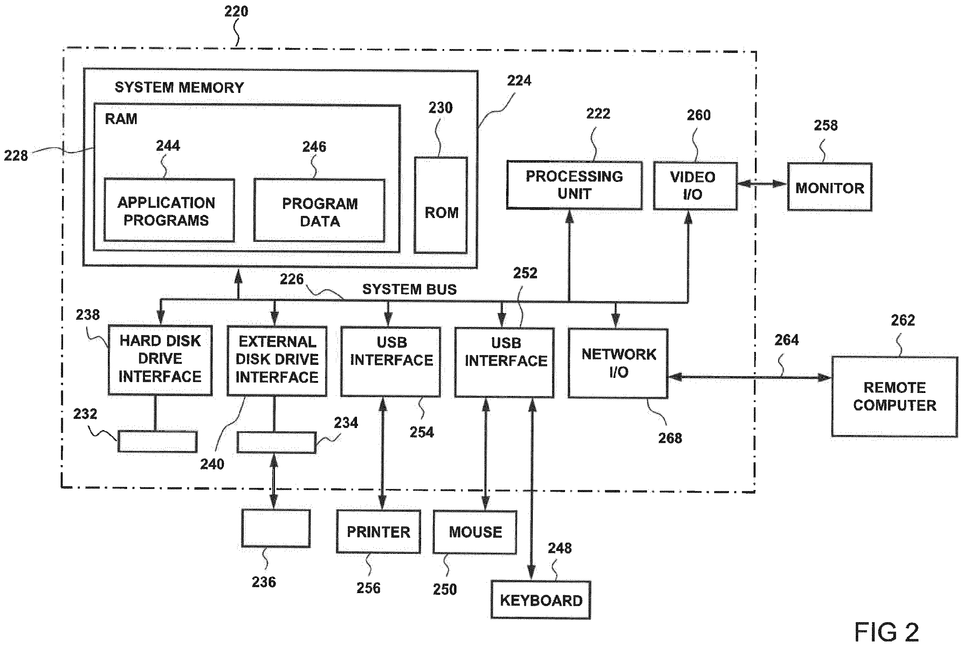

**Figure 2** shows an exemplary system for implementing the claimed subject matter including a general purpose computing device in the form of a conventional computing environment 220 (e.g. a personal computer). The conventional computing environment includes a processing unit 222, a system memory 224, and a system bus 226. The system bus couples various system components including the system memory 224 to the processing unit 222. The processing unit 222 may perform arithmetic, logic and/or control operations by accessing the system memory 224. The system memory 224 may store information and/or instructions for use in combination with the processing unit 222. The system memory 224 may include volatile and non-volatile memory, such as a random access memory (RAM) 228 and a read only memory (ROM) 230. A basic input/output system (BIOS) containing the basic routines that helps to transfer information between elements within the personal computer 220, such as during start-up, may be stored in the ROM 230. The system bus 226 may be any of several types of bus structures including a memory bus or memory controller, a peripheral bus, and a local bus using any of a variety of bus architectures.

The personal computer 220 may further include a hard disk drive 232 for reading from and writing to a hard disk (not shown), and an external disk drive 234 for reading from or writing to a removable disk 236. The removable disk may be a magnetic disk for a magnetic disk driver or an optical disk such as a CD ROM for an optical disk drive. The hard disk drive 232 and the external disk drive 234 are connected to the system bus 226 by a hard disk drive interface 238 and an external disk drive interface 240, respectively. The drives and their associated computer-readable media provide non-volatile storage of computer readable instructions, data structures, program modules and other data for the personal computer 220. The data structures may include relevant data for the implementation of the method for determining version information of a network service, as described above. The relevant data may be organized in a database, for example a relational or object database.

Although the exemplary environment described herein employs a hard disk (not shown) and an external disk 236, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 236, ROM 230 or RAM 228, including an operating system (not shown), one or more application programs 244, other program modules (not shown), and program data 246. The application programs may include at least a part of the functionality as depicted in Figure 1.

A user may enter commands and information, as discussed below, into the personal computer 220 through input devices such as keyboard 248 and mouse 250. Other input devices (not shown) may include a microphone (or other sensors), joystick, game pad, scanner, or the like. These and other input devices may be connected to the processing unit 222 through a serial port interface 252 that is coupled to the system bus 226, or may be collected by other interfaces, such as a parallel port interface 254, game port or a universal serial bus (USB). Further, information may be printed using printer 256. The printer 256, and other parallel input/output devices may be connected to the processing unit 222 through parallel port interface 254. A monitor 258 or other type of display device is also connected to the system bus 226 via an interface, such as a video input/output 260. In addition to the monitor, computing environment 220 may include other peripheral output devices (not shown), such as speakers or other audible output.

The computing environment 220 may communicate with other electronic devices such as a computer, telephone (wired or wireless), personal digital assistant, television, or the like. To communicate, the computer environment 220 may operate in a networked environment using connections to one or more electronic devices. **Figure 2** depicts the computer environment networked with remote computer 262. The remote computer 262 may be another computing environment such as a server, a router, a network PC, a peer device or other common network node, and may include many or all of the elements described above relative to the computing environment 220. The logical connections depicted in **Figure 2** include a local area network (LAN) 264 and a wide area network (WAN) 266. Such networking environments are commonplace in offices, enterprise-wide computer networks, intranets and the Internet and may particularly be encrypted.

When used in a LAN 264, the computing environment 220 may be connected to the LAN 264 through a network I/O 268. The modem 270, which may be internal or external to computing environment 220, is connected to the system bus 226 via the serial port interface 252. In a networked environment, program modules depicted relative to the computing environment 220, or portions thereof, may be stored in a remote memory storage device resident on or accessible to remote computer 262. The network connections shown are exemplary and other means of establishing a communications link between the electronic devices may be used.

The above-described computing system is only one example of the type of computing system that may be used to implement the method for determining version information of a network service.

## Claims

1. A computer-implemented method for determining version information of a network service, the method comprising:
providing a plurality of specified queries;
receiving an identifier of the network service;
retrieving, using the identifier, a first one of the specified queries;
querying the network service via the first specified query, wherein the first specified query includes a first task;
receiving a response to the first specified query;
determining, based on the response, a first result indication that indicates whether the first task has been successfully carried out;
determining first version information of the network service based on the first result indication;
providing the version information of the network service, wherein the version information includes the first version information.

2. The method of claim 1, wherein the network service is one of the following:
a content management system;
an internet forum or message board;
a software component for a computer language, such as a parser, an interpreter or a compiler;
a database;
an HTTP server;
an email service;
a virtual machine;
an application container.

3. The method of claim 1 or 2, wherein the version information relates to the security of the network service and/or a stage of development of the network service.

4. The method of any one of the preceding claims, wherein the version information includes one of the following:
a version of the network service,
an indication that the network service is not assigned at least one released version,
a lower boundary of the version of the network service without specifying an upper boundary,
an upper boundary of the version of the network service without specifying a lower boundary,
a lower boundary and an upper boundary of the version of the network service.

5. The method of any one of the preceding claims, wherein versions of the network service are specified using sequence-based identifiers, including a hierarchical sequence of version numbers,
wherein the version numbers include a major version number, a minor version number, and optionally, a patch number.

6. The method of claim 5, wherein the plurality of specified queries includes:
a plurality of major version queries, the major version queries for determining version information for different major versions of the network service, each of the major version queries including a task for determining major version information;
a plurality of minor version queries, the minor version queries for determining minor version information for different minor versions of the network service, each of the minor version queries including a task for determining minor version information.

7. The method of claim 6, wherein the first specified query is one of the major version queries;
when the first result indication indicates that the first task has been successfully carried out and the first version information includes the major version number of the network service, the method further comprises:
retrieving, based on the identifier and the major version number of the network service, a minor version query from the plurality of minor version queries;
querying the network service via the first minor version query;
receiving a response to the first minor version query;
determining, based on the response to the first minor version query, a minor version result indication that indicates whether the task for determining minor version information has been successfully carried out;
determining minor version information of the network service based on the minor version result indication;
wherein the provided version information further includes the minor version information.

8. The method of claim 6 or 7, wherein the first specified query is for determining major version information for the highest major version in the plurality of major version queries;
wherein the first minor version query is for determining minor version information for the lowest minor version in the plurality of minor version queries.

9. The method of any one of claims 6 to 8, when the first result indication indicates that the first task has not been successfully carried out,
determining version information about the major version of the network service by:
retrieving major version queries, in descending order of major version number, from the specified queries until:
a major version result indication determined from a response to one of the retrieved major version queries indicates that a task included with the major version query has been successfully carried out by the network service, or
the major version result indication indicates that no task included with one of the retrieved major version queries has been successfully carried out and no further major version queries are available;
determining major version information based on the major version result indication;
wherein the first version information includes the major version information.

10. The method of any one of claims 6 to 9, when first minor version result indication indicates that the task for determining minor version information has been successfully carried out,
determining version information about the minor version of the network service by:
retrieving, based on the identifier and the major version number of the network service, minor version queries, the minor version queries being retrieved from the specified queries in ascending order of minor version number until:
a minor version result indication determined from a response to one of the retrieved minor version queries indicates that a task included with the minor version query has been successfully carried out by the network service, or
the minor version result indication indicates that no task included with one of the retrieved minor version queries has been successfully carried out and no further minor version queries are available;
determining minor version information based on the minor version result indication;
wherein the provided version information further includes the minor version information.

11. The method of any one of the preceding claims, wherein at least one of the specified queries includes at least one placeholder for a random value; wherein the method further comprises:
determining at least one random value;
after retrieving a respective one of the specified queries, including the random value in the placeholder of the respective specified query.

12. The method of any one of the preceding claims, wherein the response to the first specified query includes a timestamp and wherein the method further comprises:
when the response is received before the end of a specified period and the response indicates that the first task has been successfully carried out, the version information comprises an indication that a version of the network service is at least a first released version;
when the response is not received before the end of the specified period or the response indicates that the task has not been successfully carried out, the version information comprises an indication that the version of the network service is less than the first released version or that the version of the network service is not the first released version.

13. The method of any one of the preceding claims, wherein the network service is accessible via the internet, optionally using an application layer protocol of the internet protocol suite.

14. A computer program comprising computer-readable instructions, which, when loaded and executed on a computer system, cause the computer system to perform operations according to the method of any one of the preceding claims.

15. A network security tool for use on a computer system, the network security tool comprising a plurality of different modules, wherein one of the modules includes program code, which, when executed on the computer system, causes the computer system to perform operations according to the method of any one of claims 1 to 13.
